# FASCICULE DE BREVET EUROPEEN

(11) **EP 2 544 891 B1**
(45) Date de publication et mention de la délivrance du brevet: **03.06.2020**
(21) Numéro de dépôt: 11707439.3
(22) Date de dépôt: 11.03.2011
(51) Int. Cl.: C22F 1/04, B21D 47/04, B22F 7/04, B32B 5/18, C22C 47/20, C22F 1/00, B32B 15/20, B32B 3/28, B22F 7/00, B32B 15/01, B32B 3/26, F28F 21/08

(54) **PROCÉDÉ DE FABRICATION D'UN ASSEMBLAGE MÉTALLIQUE**
VERFAHREN ZUR HERSTELLUNG EINER METALLANORDNUNG
METHOD FOR MANUFACTURING A METAL ASSEMBLY

(30) Priorité: 12.03.2010 FR 1051808
(43) Date de publication de la demande: 16.01.2013
(73) Titulaire: Centre National de la Recherche Scientifique (C.N.R.S.), 75016 Paris (FR); CNAM-CONSERVATOIRE NATIONAL DES ARTS ET METIERS, 75003 Paris (FR); Ecole Normale Supérieure de Cachan, 94230 Cachan (FR)
(72) Inventeur: PREVOND, Laurent, F-77270 Villeparisis (FR); COLLARD, Nicolas, F-08300 Rethel (FR); CAPLAIN, Renaud, F-75015 Paris (FR); FRANCOIS, Pierre, F-92120 Montrouge (FR)
(74) Mandataire: Novagraaf Technologies
(86) Numéro de dépôt international: PCT/EP2011/053748
(87) Numéro de publication internationale: WO 2011/110686

(56) Documents cités:
- EP-A2- 1 061 596
- JP-A- 2 011 320
- JP-A- 5 307 913
- JP-A- 7 262 827
- US-A1- 2005 208 263
- DATABASE WPI Week 199144 Thomson Scientific, London, GB; AN 1991-321345 XP002634277, & JP 3 215027 A (MATSUSHITA ELEC IND CO LTD) 20 septembre 1991 (1991-09-20)
- DATABASE WPI Week 200228 Thomson Scientific, London, GB; AN 2002-220834 XP002634278, & JP 2001 297780 A (UEMATSU H) 26 octobre 2001 (2001-10-26)

## Description

L'invention concerne de manière générale la fabrication d'assemblages aluminium-métal.

Plus précisément, l'invention concerne la fabrication d'un ensemble comprenant un objet en aluminium et un revêtement métallique choisi parmi le groupe suivant: cuivre, nickel et fer, assemblés de manière à obtenir un assemblage métallique ayant une forte cohésion.

L'aluminium est un métal malléable, paramagnétique, de faible densité, très conducteur et ayant des propriétés de résistance à l'oxydation remarquables.

En effet, lors de son oxydation avec l'air, il se forme très rapidement en surface une couche fine d'alumine qui permet de le protéger contre la progression de l'oxydation. Cette couche d'alumine naturelle a une épaisseur allant généralement d'un à cinq micromètres.

Néanmoins, l'alumine est très isolante, contrairement à l'aluminium, et forme une barrière empêchant notamment le mouillage de l'aluminium sur un autre métal (par exemple sur du fer, de l'acier ou du cuivre).

Certaines applications nécessitent cependant des matériaux ayant à la fois des propriétés de l'aluminium, notamment sa conductivité, sa faible densité, etc. mais aussi des propriétés supplémentaires telles que le magnétisme, la résistance à la rupture, la capacité à être soudé, la rigidité, ou encore une meilleure conductivité, que peuvent présenter notamment l'acier, le nickel ou le cuivre.

Or la fabrication d'un alliage à base d'aluminium est souvent très problématique. Typiquement, les diagrammes d'équilibre montrent que les alliages à base d'aluminium avec des matériaux ferromagnétiques sont possibles, mais qu'ils ne sont susceptibles de former qu'un nombre limité de composés, mécaniquement fragiles et paramagnétiques.

La fabrication et la mise en forme d'assemblage métalliques comprenant un objet en aluminium et un revêtement dans un autre métal, notamment du nickel, du cuivre, du fer, du cobalt, etc. intéresse également les industriels. En effet, la réalisation d'assemblages métalliques légers et rigides nécessite actuellement des assemblages par soudure, collage, etc. qui ne sont pas réalisables aisément avec tous les types de métaux, et en particulier avec de l'aluminium, et qui présentent généralement une cohésion limitée.

Par exemple, dans le domaine des conducteurs électriques, on cherche à réaliser des conducteurs ayant une excellente conductivité, qui soient robustes et durables et résistent aux contraintes mécaniques auxquelles ils peuvent être soumis lors de leur installation, tout en étant légers et de faible coût.

Le cuivre, qui est le métal le plus couramment utilisé pour les fils électriques, présente une excellente conductivité thermique et électrique, et permet d'obtenir des conducteurs robustes et durables. Ces conducteurs sont néanmoins denses et ne peuvent être utilisés dans tous les domaines, en particulier en aéronautique ou dans la recherche spatiale.

L'aluminium en revanche, de par sa faible densité, est particulièrement adapté dans les domaines où la masse du conducteur constitue une contrainte technique. Typiquement, il est souvent utilisé dans le transport d'électricité de grande puissance. Néanmoins, l'aluminium est moins conducteur que le cuivre et plus malléable de sorte qu'il casse plus facilement et ne peut donc être utilisé dans tout type d'installation électrique. Par ailleurs, les connexions en aluminium s'avèrent difficiles, d'une part à cause de la couche d'alumine qui se forme en surface de l'aluminium et qui, comme on l'a vu, empêche toute soudure et n'est pas conductrice. Il est donc souvent nécessaire d'utiliser des moyens de connexion spécifiques.

On a donc cherché à obtenir des assemblages métalliques constitués à la fois d'aluminium et d'un autre métal tel que le cuivre, afin de combiner les propriétés avantageuses de ces matériaux. Les procédés précédemment connus sont toutefois difficiles à mettre en œuvre et relativement coûteux.

Typiquement, les dépôts chimiques ou électrolytiques de métaux sur de l'aluminium ont un très faible rendement, dû à la présence de la couche d'alumine.

Un autre procédé connu consiste à projeter les métaux par plasma, tels que le cuivre, sur l'objet en aluminium. Ce procédé est cependant difficile à mettre en œuvre et couteux.

Il est également connu, afin d'assembler des couches de mousse d'aluminium entre elles, de laminer un empilement de plusieurs couches de mousse d'aluminium, comme décrit dans le document JP2011320. Le procédé décrit dans ce document ne permet cependant que d'assembler des couches de mousses métalliques ensemble sans pour autant qu'il soit possible d'assembler une mousse métallique avec un objet métallique de sorte que l'assemblage entre la mousse métallique et l'objet métallique soit inséparable.

Un autre procédé de fabrication d'un assemblage, qui est décrit dans le document JP3215027, propose de colaminer une mousse métallique avec une tôle de métal. Le procédé décrit dans ce document ne permet pas d'incruster totalement la mousse métallique dans l'objet métallique de sorte que la surface de la couche de mousse métallique sur la surface de l'objet métallique forme une couche pleine et homogène.

Un objectif de l'invention est donc de proposer un procédé de fabrication d'un assemblage aluminium-métal qui soit reproductible, de faible coût, qui implique de faibles dépenses énergétiques et qui permette d'obtenir un assemblage présentant à la fois des propriétés de l'aluminium et celle d'un autre métal.

Pour cela, l'invention propose un procédé de fabrication conforme à la revendication 1.

Certains aspects préférés mais non limitatifs du procédé sont proposés dans les revendications indépendentes.

Quelques variations possibles sont aussi divulgués dans la présente demande, pas toutes suivant les revendications:
- l'objet est un fil, un câble, une barre, une feuille, une tôle,
- l'objet métallique est une feuille ou une tôle d'aluminium, et la contrainte mécanique est appliquée à l'assemblage métallique par colaminage, emboutissage, embossage, matriçage, ou estampage de l'objet métallique avec la mousse métallique,
- le colaminage est réalisé à froid,
- l'objet est un fil ou un câble et la contrainte mécanique est appliquée par sertissage ou laminage dans une filière de la couche métallique sur l'objet,
- le sertissage est réalisé au moyen d'une cosse dont une surface interne est recouverte par la mousse métallique,
- la mousse métallique est incrustée sur toute la surface de l'objet métallique,
- il comprend en outre une étape de densification de la couche métallique au cours de laquelle on applique une couche métallique supplémentaire réalisée dans un troisième matériau sur la couche métallique de l'assemblage,
- la couche métallique supplémentaire est appliquée par dépôt chimique ou électrolytique,
- la couche métallique supplémentaire est une mousse métallique supplémentaire qui est incrustée dans la surface de la couche métallique de l'assemblage métallique en réitérant les étapes de placement et d'application d'une contrainte du procédé, et
- le deuxième métal est de l'aluminium, et le procédé comprend en outre les étapes suivantes préalablement à l'étape de placement de la mousse sur l'objet :
- traiter thermiquement l'objet en aluminium en le portant à une température comprise entre 80% et 100% de la température de fusion du matériau la constituant pour créer et stabiliser une couche d'alumine alpha par transformation allotropique de la couche d'oxyde présente en surface de dudit objet en aluminium, et
- laisser refroidir l'objet en aluminium.

Selon un deuxième aspect, l'invention concerne un assemblage métallique obtenu par le procédé de fabrication selon l'invention, suivant la revendication 8.

Certains aspects préférés mais non limitatifs de l'assemblage métallique divulgués dans la présente demande, bien que pas tous faisant partie de l'invention sont les suivants :
- le premier et le deuxième métal sont choisis respectivement parmi les couples de métaux suivants :
- cuivre, aluminium,
- aluminium, cuivre,
- nickel, aluminium,
- aluminium, nickel,
- fer, aluminium,
- il comprend en outre une couche métallique supplémentaire réalisée dans un troisième métal,
- la couche métallique supplémentaire est incrustée dans la couche métallique réalisée dans le premier matériau,
- l'objet métallique est un fil ou un câble en aluminium et la couche métallique est en cuivre, et
- l'objet métallique est une tôle ou une feuille en aluminium et la couche métallique est en cuivre ou en nickel.

D'autres caractéristiques, buts et avantages de la présente invention apparaîtront mieux à la lecture de la description détaillée qui va suivre, et en regard des dessins annexés, donnés à titre d'exemple, non limitatifs et sur lesquels :

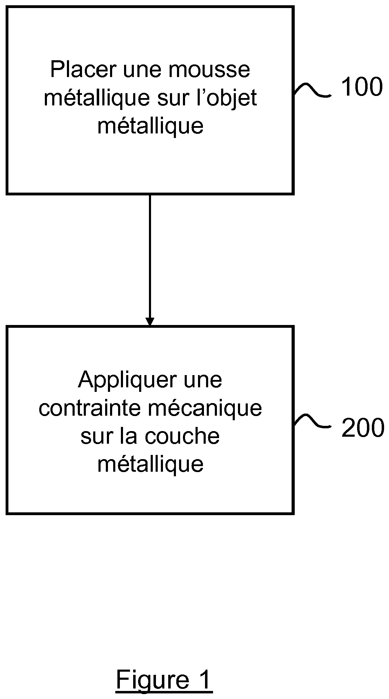

La figure 1 est une représentation graphique d'une forme de réalisation du procédé selon l'invention,

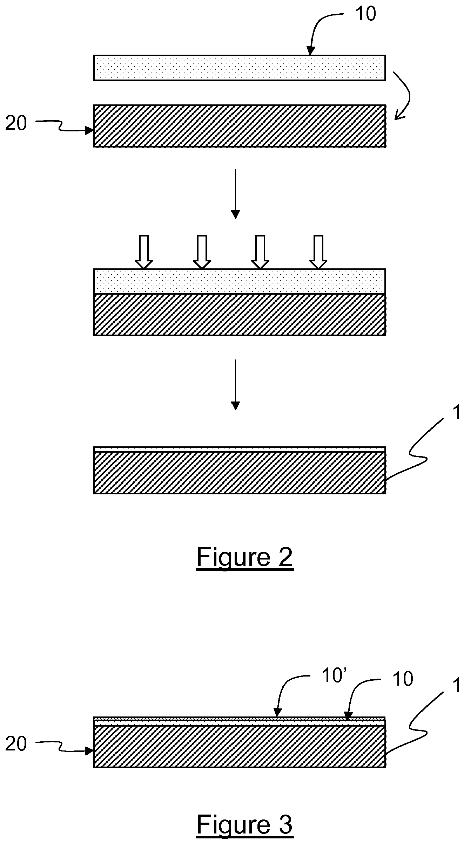

La figure 2 représente un exemple d'un premier assemblage métallique vu en coupe au cours des différentes étapes du procédé selon l'invention, et
La figure 3 est une vue en coupe d'un exemple d'un deuxième assemblage métallique selon l'invention.

Nous allons à tout d'abord décrire un procédé de fabrication d'un assemblage métallique 1 composé d'une couche métallique réalisée dans un premier métal à la surface d'un objet métallique 10 réalisé dans un deuxième métal, l'un au moins des premier et deuxième métaux étant de l'aluminium.

L'aluminium peut être de l'aluminium pur (par exemple de type A9) ou allié. Il peut s'agir notamment d'un aluminium appartenant à la série 1000 de la nomenclature internationale (A5 à A9, ...) ou AU4G (nomenclature française).

L'autre métal peut quant à lui être un métal pur ou allié. Dans ce qui suit, nous décrirons plus particulièrement les modes de réalisation dans lesquels le métal est du cuivre, du nickel, du fer ou encore de l'aluminium. Ceci n'est cependant pas limitatif, dans d'autres procédés pas selon l'invention d'autres métaux pouvant être utilisés tant que ceux-ci présentent une ductilité inférieure ou égale à celle de l'aluminium.

Enfin, la forme et les dimensions de l'objet 10 choisi pour la réalisation du procédé selon l'invention définie dans la revendication 1 ne sont limitées que par les étapes du procédé lui-même et les outils mis en œuvre. Nous en donnerons quelques exemples par la suite, mais seuls les exemples en accord avec les revendications 1 et 8 font partie de l'invention.

Selon une première étape 100, on dépose sur une surface de l'objet métallique 10 une couche métallique réalisée dans le premier matériau.

Conformément à l'invention, la couche métallique est une mousse métallique 20 présentant une porosité ouverte. Les pores de la mousse métallique 20 sont inférieurs à 1 millimètre afin de permettre l'incrustation de la mousse dans l'objet métallique. En effet, lorsque le diamètre des pores est trop important, la mousse métallique 20 n'est plus suffisamment rigide pour accrocher l'objet métallique.

Dans une deuxième étape 200, on applique une contrainte mécanique sur la mousse métallique 20 de manière à l'incruster dans la surface de l'objet 10.

La contrainte mécanique suivant l'invention est réalisée par sertissage. D'autres possibilités ne sont pas suivant l'invention, notamment colaminage, emboutissage (ou toute autre technique telle que l'embossage, le matriçage ou encore l'estampage) selon la forme initiale de l'objet 10.

Typiquement, en dehors de la présente invention, si l'objet 10 est relativement plan, tel qu'une tôle métallique, une feuille métallique, une grille métallique, un déployé, etc. et présente des dimensions permettant de faire passer l'objet 10 et la mousse 20 dans un laminoir, la contrainte mécanique peut alors être réalisée par colaminage de l'objet métallique 10 avec la mousse métallique.

Par exemple, pour une tôle d'aluminium 10 de 0.8 mm d'épaisseur et une mousse métallique 20 de 2 mm d'épaisseur, la contrainte mécanique est réalisée par colaminage dans un laminoir conventionnel. L'assemblage métallique 1 obtenu est alors composé d'une couche de cuivre 20 incrustée dans la tôle d'aluminium 10, dont l'épaisseur globale est de l'ordre de 0.7 mm, les deux métaux ayant une excellente cohésion et ne pouvant être séparés mécaniquement.

Un résultat similaire est obtenu par exemple par colaminage d'une tôle d'aluminium 10 avec une mousse 20 de nickel, de fer ou d'aluminium, ou encore par colaminage d'une tôle 10 de cuivre, de nickel, etc. avec une mousse d'aluminium 20.

Le colaminage de l'objet 10 avec la mousse métallique 20 peut être effectué à chaud ou à froid, en une ou plusieurs passes. Cependant, les inventeurs ont remarqué que le colaminage à froid (i.e. à température ambiante, sans apport de chaleur, par exemple entre environ 0°C et 60°C) en une seule passe permettait d'obtenir de bien meilleurs résultats.

En effet, en effectuant le colaminage à chaud, la mousse métallique 20 risque de s'oxyder, gênant alors l'assemblage, en particulier lorsque celle-ci est en cuivre.

Le colaminage peut en revanche être effectué en plusieurs passes : néanmoins, cela augmente le coût global du procédé de fabrication ainsi que sa durée, sans pour autant améliorer la cohésion entre l'objet métallique 10 et la couche métallique de l'assemblage 1.

Le colaminage peut notamment être effectué à une vitesse comprise entre 0,1 km/h et 3 km/h, en appliquant une pression de quelques tonnes, typiquement de l'ordre de trois à quatre tonnes.

Préalablement au colaminage, il est possible d'assembler l'objet métallique 10 et la mousse métallique 20 afin d'éviter que l'assemblage métallique 1 ne se déforme ou qu'il ne dérive lors du colaminage, par exemple par rivetage de l'objet 10 et de la mousse, soudure par points lorsque cela est possible, prélaminage de la tête de l'assemblage, vis auto-perforantes, soudage par faisceau d'électron, ou tout système de collage ou de bridage conventionnel.

Dans l'exemple hors de la portée de la présente invention précédemment décrit, on obtient alors une tôle d'aluminium 10 sur laquelle est imprimée une fine couche de cuivre 20. Cet assemblage métallique 1 présente à la fois :
- les propriétés de l'aluminium, et plus particulièrement sa densité, sa malléabilité, ainsi que ses caractères paramagnétique et conducteur, sans pour autant présenter, au niveau de la face imprimée, les inconvénients de l'aluminium liés à la présence en surface de la couche d'oxyde, et
- les propriétés du cuivre, à savoir ici sa conductibilité électrique et thermique, sa résistance à la corrosion, etc.

L'assemblage métallique 1 est donc soudable au niveau de la couche de cuivre, notamment à l'étain, et peut être assemblé par des moyens classiques, sans traitement thermique, chimique ou mécanique supplémentaire, puisque la couche d'alumine de la tôle d'aluminium 10 est à présent recouverte de la couche de cuivre 20.

Ce procédé permet en outre d'obtenir de grandes surfaces d'aluminium recouvertes d'une couche de cuivre, et utilisables comme électrodes pour des piles à combustible. Avantageusement, la fabrication de telles électrodes selon le procédé de l'invention est facilement industriable à grande échelle à très faibles coût et dépenses énergétiques.

Le procédé permet également de réaliser facilement des anodes sacrificielles, par impression sur une tôle d'aluminium 10 d'une mousse 20 de cuivre, de nickel, etc.

Selon une deuxième forme de réalisation, aussi en dehors de la porté de l'invention, la contrainte mécanique est appliquée par emboutissage de l'objet métallique 10 avec la mousse métallique 20.

L'objet métallique 1 est donc, ici encore, une feuille ou tôle métallique, à laquelle on donne une forme non développable conformément aux techniques d'emboutissage conventionnelles.

Pour cela, on place l'objet métallique 10 surmonté de la mousse métallique 20 dans une presse à emboutir, puis on applique à l'objet 10 et à la mousse 20 la contrainte mécanique en les emboutissant. On obtient alors un assemblage métallique 1 présentant la forme non développable recouverte d'une couche métallique 20 issue de la mousse incrustée dans l'objet métallique 10.

D'autres techniques pas dans la présente invention telles que l'embossage, le matriçage, l'estampage, etc. sont également utilisables pour l'étape d'application de la contrainte mécanique.

Selon une troisième forme de réalisation, celui-ci faisant parti de l'invention, la contrainte mécanique est appliquée par sertissage de la mousse métallique 20 sur l'objet métallique 10.

Cette forme de réalisation est particulièrement adaptée notamment lorsque l'objet 10 présente une dimension (longueur) très grande devant les deux autres dimensions (largeur et hauteur), comme par exemple un fil, un câble, etc. et que la mousse 20 est appliquée localement sur l'objet 10.

Pour cela, on peut notamment mettre en œuvre un outil à sertir, tel qu'une pince ou une presse à sertir, qui peut être manuel, électro-hydraulique, etc. et permet d'incruster la mousse métallique 20 sur tout ou partie de l'objet métallique 10.

Le sertissage est de préférence réalisé localement, par exemple au niveau d'une extrémité seulement de l'objet 10, ou sur toute sa longueur.

Le procédé consiste alors à placer la mousse métallique 20 sur la partie de l'objet 10 à imprimer, puis, à l'aide de l'outil à sertir, à appliquer une contrainte mécanique sur la mousse 20 de manière à l'incruster dans la surface de l'objet 10.

En variante, le sertissage est réalisé à l'une des extrémités de l'objet 10 au moyen d'une garniture métallique, typiquement une cosse.

Dans ce cas, la mousse métallique 20 peut être disposée sur l'extrémité à sertir. On place alors une cosse sur la mousse métallique 20 avant de la sertir sur l'objet 10.

Il est également possible de mettre en œuvre une cosse pourvue directement, sur sa face interne, de la mousse métallique 20. Il suffit alors de placer la cosse munie de la mousse métallique 20 sur l'extrémité de l'objet 10 à sertir, puis d'appliquer la contrainte mécanique sur la cosser de manière à incruster la mousse 20 dans la surface de l'extrémité de l'objet 10.

L'assemblage métallique 1 ainsi obtenu est alors un fil ou câble en aluminium, recouvert au moins au niveau d'une extrémité d'une couche métallique 20 qui peut être en cuivre, en nickel, en fer, etc.

En variante, en dehors de la présente invention, la contrainte mécanique est appliquée par laminage dans une filière sur toute la longueur de l'objet métallique 10, qu'il s'agisse d'un fil ou d'un câble, de manière à incruster la mousse métallique 20 sur toute sa surface.

De tels fils/câbles 1 peuvent alors être avantageusement utilisés dans la distribution électrique basse tension dans les domaines du bâtiment et domestique, ou encore dans l'aéronautique et l'automobile. Ces nouveaux fils/câbles électriques 1 sont en effet plus légers que les fils électriques en cuivre conventionnels, tout en présentant une meilleure conductibilité électrique et thermique que les fils en aluminium conventionnels. Par ailleurs, la présence de la couche de cuivre 20, au moins au niveau des extrémités du fil 1, facilite grandement ses connexions puisqu'il devient soudable et conducteur, de sorte qu'il peut à présent être utilisé avec des connexions conventionnelles. Enfin, l'impression de cuivre sur l'aluminium réduit les problèmes liés à l'oxydation de l'aluminium et notamment la résistance de passage au courant électrique dans les connexions.

Les fils ou câbles électriques 1 ainsi obtenu sont donc des conducteurs ayant une excellente conductivité, robustes et durables et pouvant résister aux contraintes mécaniques auxquels ils peuvent être soumis lors de leur installation, tout en étant légers et de faible coût.

Optionnellement, le procédé comprend en outre une étape supplémentaire consistant à densifier la couche métallique de l'assemblage métallique 1 ainsi obtenu.

Cette étape de densification peut être réalisée en réitérant le procédé selon l'invention. On applique alors une mousse métallique supplémentaire 10'. Cette mousse supplémentaire 10' peut être identique à la mousse métallique 20 utilisée préalablement pour la réalisation de l'assemblage 1, ou être dans un métal différent et/ou présenter des dimensions (porosité, épaisseur de la mousse, etc.) différentes.

Après réitération du procédé avec cette mousse métallique supplémentaire 10', la couche métallique de l'assemblage 1 est alors plus compacte et recouvre mieux l'objet métallique 10.

On comprendra qu'un objet en aluminium imprimé à plusieurs reprise selon le procédé de l'invention avec plusieurs couches de mousses métalliques sera mieux isolé et encore plus facilement soudable qu'un même objet ne comportant qu'une couche métallique imprimée, puisque l'empilement des mousses métalliques réduit la surface d'aluminium non couverte en raison de la présence des pores.

Selon une variante de réalisation, la couche métallique peut également être densifiée par dépôt chimique ou électrolytique d'une couche métallique supplémentaire 10'.

C'est le cas notamment de la couche de cuivre imprimée sur la tôle d'aluminium de l'exemple précédent, qui peut facilement être densifiée par dépôt chimique ou électrolytique de la couche supplémentaire 10' selon les techniques conventionnelles. La couche de cuivre constitue en effet une barrière pour la couche d'alumine en surface de la tôle d'aluminium et permet donc de tels dépôts.

De manière optionnelle, comme l'objet métallique 10 est en aluminium, le procédé peut en outre comprendre une étape supplémentaire de traitement thermique de l'objet 10 préalablement à son étape 100 d'assemblage avec la mousse métallique.

Selon une première étape, on effectue une transformation allotropique de la couche d'oxyde présente en surface de la feuille d'aluminium.

Pour cela, on porte l'objet 10 en aluminium à une température comprise entre environ 80% et 100% de la température de fusion de son matériau constitutif pendant une durée suffisamment importante pour stabiliser ladite couche.

De préférence, on chauffe l'objet 10 en aluminium à une température comprise entre 93% et 98% de la température de fusion, plus préférentiellement encore à une température de l'ordre de 95% (+/- 1%).

Par exemple, l'objet 10 en aluminium peut être un papier aluminium alimentaire, ayant une épaisseur comprise entre 5 et 20 microns chauffée entre 500°C et 660°C, ou une tôle d'aluminium de 2 mm d'épaisseur réalisée dans un alliage d'AU4G chauffé entre 500°C et 550°C.

Pour ces deux exemples d'objet 10 en aluminium, la durée du traitement thermique est alors comprise entre une vingtaine de minutes et environ deux heures, de préférence une trentaine de minutes.

Dans le cas d'objet 10 tels que des tôles d'aluminium d'épaisseur plus importante, typiquement 12 mm, la durée du traitement thermique est alors de préférence de l'ordre de 45 minutes.

Dans une deuxième étape, on refroidit l'objet 10 en aluminium.

Il faut distinguer ici le temps nécessaire pour refroidir l'objet 10 en aluminium et le temps de séjour à la température de stabilisation de la couche d'alumine qui doit être considéré comme essentiel. Le temps de refroidissement et la température finale après refroidissement ne sont en effet pas des caractéristiques déterminantes per se, tant que l'on réduit suffisamment la température de l'objet 10 en aluminium pour permettre son traitement ultérieur par le procédé de l'invention, c'est-à-dire ici son assemblage avec la mousse métallique et sa contrainte mécanique.

Il est en effet possible de laisser refroidir l'objet 10 en aluminium lentement à l'air ou rapidement (par exemple par une trempe), sans que cela n'ait d'influence sur le résultat obtenu.

La température finale de refroidissement peut, par exemple, être la température de la pièce dans laquelle est mis en œuvre le procédé, typiquement une vingtaine de degrés. Il est cependant possible de refroidir davantage l'objet 10 en aluminium (par exemple jusqu'à zéro degrés Celsius), ou de moins le refroidir (par exemple jusqu'à une soixantaine de degrés Celsius).

On obtient alors un objet 10 en aluminium ayant une résistance à la rupture moins importante qu'avant traitement thermique (entre 15 et 20 MPa pour une feuille d'aluminium de 2 mm, au lieu d'une soixantaine avant traitement thermique). Le traitement thermique permet en effet d'augmenter la taille du grain de l'aluminium, facilitant ainsi son travail ultérieur.

Il n'est pas nécessaire de mettre en œuvre les étapes d'assemblage et de contrainte mécanique du procédé de fabrication immédiatement après le traitement thermique. Par exemple, il est possible de laisser quelques heures voire quelques semaines s'écouler entre le traitement thermique et le l'assemblage des feuilles.

Par ailleurs, ce traitement thermique rend l'objet 10 en d'aluminium soudable, de sorte qu'il devient possible d'assembler l'objet 10 en aluminium avec la mousse métallique préalablement à leur contrainte mécanique par soudure par points ou par faisceau d'électron.

## Revendications

1. Procédé de fabrication d'un assemblage métallique (1) aluminium-métal, composé d'une couche métallique réalisée dans un premier métal choisi parmi le groupe suivant : cuivre, nickel, fer, à la surface d'un objet métallique (10) réalisé en aluminium, **caractérisé en ce qu'**il comprend les étapes suivantes :
- placer (100) une mousse métallique (20) ayant une porosité ouverte sur une surface de l'objet métallique (10), le diamètre des pores étant inférieur à un millimètre de sorte que la mousse métallique (20) soit suffisamment rigide pour accrocher l'objet métallique (10), et
- appliquer (200) une contrainte mécanique sur la mousse métallique (20) de manière à l'incruster dans la surface de l'objet (10) et former la couche métallique sur l'objet métallique (10),
le procédé étant **caractérisé en ce que** l'objet présente une dimension très grande devant les deux autres, et **en ce que** la contrainte mécanique est appliquée par sertissage de la mousse métallique sur l'objet métallique.

2. Procédé selon la revendication 1 , dans lequel l'objet (10) est un fil, un câble ou une barre.

3. Procédé selon l'une des revendications 1 à 2, dans lequel dans lequel le sertissage est réalisé au moyen d'une cosse dont une surface interne est recouverte par la mousse métallique (20).

4. Procédé selon l'une des revendications 1 à 3, comprenant en outre une étape de densification de la couche métallique sur l'objet métallique au cours de laquelle on applique une couche métallique supplémentaire (10') réalisée dans un troisième matériau sur la couche métallique (20) de l'assemblage (1).

5. Procédé selon la revendication 4, dans lequel la couche métallique supplémentaire (10') est appliquée par dépôt chimique ou électrolytique.

6. Procédé selon la revendication 4, dans lequel la couche métallique supplémentaire (10') est une mousse métallique supplémentaire qui est incrustée dans la surface de la couche métallique (20) de l'assemblage métallique (1) en réitérant les étapes de placement (100) et d'application d'une contrainte (200).

7. Procédé selon l'une des revendications 1 à 6, comprenant en outre les étapes suivantes préalablement à l'étape de placement (100) de la mousse (20) sur l'objet (10) :
- traiter thermiquement l'objet en aluminium (10) en le portant à une température comprise entre 80% et 100% de la température de fusion du matériau la constituant pour créer et stabiliser une couche d'alumine alpha par transformation allotropique de la couche d'oxyde présente en surface de dudit objet en aluminium (10), et
- laisser refroidir l'objet (10) en aluminium.

8. Assemblage métallique (1) obtenu par le procédé de fabrication selon l'une des revendications 1 à 7, **caractérisé en ce qu'**il comprend une couche métallique (20) réalisée dans un premier métal choisi parmi le groupe suivant : cuivre, nickel, fer, incrustée dans une surface d'objet métallique (10) réalisée en aluminium suite à l'étape (200) d'application de la contrainte mécanique.

9. Assemblage métallique (1) selon la revendication 8, comprenant en outre une couche métallique supplémentaire (10') réalisée dans un troisième métal.

10. Assemblage métallique (1) selon la revendication 9, dans lequel la couche métallique supplémentaire (10') est incrustée dans la couche métallique réalisée dans le premier matériau.

## Patentansprüche

1. Verfahren zur Herstellung eines Metallverbunds (1) Aluminium-Metall, welcher von einer aus einem ersten Metall, das aus der folgenden Gruppe ausgewählt ist: Kupfer, Nickel, Eisen, bestehenden Metallschicht auf der Oberfläche eines aus Aluminium bestehenden Metallgegenstands (10) gebildet wird, **dadurch gekennzeichnet, dass** es die folgenden Schritte umfasst:
- Aufbringen (100) eines Metallschaums (20) mit einer offenen Porosität auf eine Oberfläche des Metallgegenstands (10), wobei der Durchmesser der Poren kleiner als ein Millimeter ist, derart, dass der Metallschaum (20) ausreichend starr ist, um an dem Metallgegenstand (10) hängenzubleiben, und
- Ausüben (200) einer mechanischen Beanspruchung auf den Metallschaum (20), um ihn in die Oberfläche des Gegenstands (10) einzubetten und die Metallschicht auf dem Metallgegenstand (10) auszubilden,
wobei das Verfahren **dadurch gekennzeichnet ist, dass** der Gegenstand eine Abmessung aufweist, die gegenüber den anderen beiden sehr groß ist, und dadurch, dass die mechanische Beanspruchung durch Aufcrimpen des Metallschaums auf den Metallgegenstand ausgeübt wird.

2. Verfahren nach Anspruch 1, wobei der Gegenstand (10) ein Draht, ein Kabel oder eine Schiene ist.

3. Verfahren nach einem der Ansprüche 1 bis 2, wobei das Aufcrimpen mittels einer Anschlusshülse durchgeführt wird, deren Innenfläche mit dem Metallschaum (20) bedeckt ist.

4. Verfahren nach einem der Ansprüche 1 bis 3, welches außerdem einen Schritt der Verdichtung der Metallschicht auf dem Metallgegenstand umfasst, in welchem eine zusätzliche Metallschicht (10'), die aus einem dritten Material besteht, auf die Metallschicht (20) des Verbunds (1) aufgebracht wird.

5. Verfahren nach Anspruch 4, wobei die zusätzliche Metallschicht (10') durch chemische oder elektrolytische Abscheidung aufgebracht wird.

6. Verfahren nach Anspruch 4, wobei die zusätzliche Metallschicht (10') ein zusätzlicher Metallschaum ist, welcher in die Oberfläche der Metallschicht (20) des Metallverbunds (1) eingebettet wird, indem die Schritte des Aufbringens (100) und des Ausübens einer Beanspruchung (200) wiederholt werden.

7. Verfahren nach einem der Ansprüche 1 bis 6, welches außerdem vor dem Schritt des Aufbringens (100) des Schaums (20) auf den Gegenstand (10) die folgenden Schritte umfasst:
- Wärmebehandeln des Gegenstands aus Aluminium (10) durch Erwärmen auf eine Temperatur zwischen 80 % und 100 % der Schmelztemperatur des Materials, aus dem er besteht, um eine Schicht aus alpha-Aluminiumoxid durch allotrope Umwandlung der Oxidschicht, die an der Oberfläche des Gegenstands aus Aluminium (10) vorhanden ist, zu erzeugen und zu stabilisieren, und
- Abkühlenlassen des Gegenstands (10) aus Aluminium.

8. Metallverbund (1), welcher durch das Herstellungsverfahren nach einem der Ansprüche 1 bis 7 erhalten wird, **dadurch gekennzeichnet, dass** er eine aus einem ersten Metall, das aus der folgenden Gruppe ausgewählt ist: Kupfer, Nickel, Eisen, bestehende Metallschicht (20) umfasst, die im Anschluss an den Schritt (200) der Ausübung der mechanischen Beanspruchung in eine Oberfläche eines aus Aluminium bestehenden Metallgegenstands (10) eingebettet wurde.

9. Metallverbund (1) nach Anspruch 8, welcher außerdem eine zusätzliche Metallschicht (10') umfasst, die aus einem dritten Metall besteht.

10. Metallverbund (1) nach Anspruch 9, wobei die zusätzliche Metallschicht (10') in die Metallschicht eingebettet ist, die aus dem ersten Material besteht.

## Claims

1. A process for manufacturing an aluminium-metal metal assembly (1), comprising a metal layer made of a first metal selected from the following group: copper, nickel, iron, on the surface of a metal object made of aluminium, wherein said process comprises the following steps:
- placing (100) a metal foam (20) having an open porosity on a surface of the metal object (10), the diameter of the pores being less than one millimetre for the metal foam (20) to be rigid enough to allow hanging of the foam in the metal object (10), and
- applying (200) mechanical stress on the metal foam (20) so as to embed it in the surface of the object (10) and form metal layer on the metal object (10),
wherein the object has one very large dimension before the two other dimensions, and wherein mechanical stress is applied to the metal assembly by crimping of the metal foam on the metal object.

2. The process as claimed in claim 1, in which the object (10) is a wire, a cable or a bar.

3. The process as claimed in claim 1 or 2, in which the crimping is completed by means of a pod whereof an internal surface is covered by the metal foam (20).

4. The process as claimed in any of claims 1 to 3, further comprising a densification step of the metal layer on the metal object during which an additional metal layer (10') made of a third material is applied to the metal layer (20) of the assembly (1).

5. The process as claimed in claim 4, in which the additional metal layer (10') is applied by chemical or electrolytic deposit.

6. The process as claimed in claim 4, in which the additional metal layer (10') is an additional metal foam which is embedded in the surface of the metal layer (20) of the metal assembly (1) by reiterating the steps of placement (100) and application of stress (200).

7. The process as claimed in any of claims 1 to 6, further comprising the following steps prior to the placement step (100) of the foam (20) on the object (10):
- thermally processing the aluminium object (10) by bringing it to a temperature between 80% and 100% of the fusion temperature of the material constituting it to create and stabilise a layer of alumina alpha by allotropic transformation of the layer of oxide present on the surface of said aluminium object (10), and
- cooling the aluminium object (10).

8. A metal assembly (1) obtained by the manufacturing process as claimed in any of claims 1 to 7, wherein said metal assembly (1) comprises a metal layer (20) made of a first metal selected from the following group: copper, nickel, iron, embedded in an aluminium made metal object (10) surface following the application step (200) of mechanical stress.

9. The metal assembly (1) as claimed in claim 8, further comprising an additional metal layer (10') made of a third metal.

10. The metal assembly (1) as claimed in claim 9, in which the additional metal layer (10') is embedded in the metal layer made of the first material.
